# EUROPÄISCHE PATENTSCHRIFT

(11) **EP 0 876 309 B1**
(45) Veröffentlichungstag und Bekanntmachung des Hinweises auf die Patenterteilung: **29.12.1999**
(21) Anmeldenummer: 97901013.9
(22) Anmeldetag: 13.01.1997
(51) Int. Cl.: C04B 35/111, C04B 35/622, B01J 2/16

(54) **SPHÄRISCHE KERAMIKFORMKÖRPER, VERFAHREN ZU IHRER HERSTELLUNG SOWIE DEREN VERWENDUNG**
MOULDED SPHERICAL CERAMIC BODY, PRODUCTION PROCESS AND USE
CORPS EN CERAMIQUE SPHERIQUES, LEUR PROCEDE DE PRODUCTION ET LEUR UTILISATION

(30) Priorität: 25.01.1996 DE 19602525
(43) Veröffentlichungstag der Anmeldung: 11.11.1998
(73) Patentinhaber: KORUND LAUFENBURG GmbH, 79725 Laufenburg (DE)
(72) Erfinder: MÖLTGEN, Paul, D-79725 Laufenburg (DE); WILHELM, Pirmin, D-79713 Säckingen (DE); LÜTTE, Martin, D-79730 Murg (DE)
(74) Vertreter: Neunert, Peter Andreas
(86) Internationale Anmeldenummer: EP9700126
(87) Internationale Veröffentlichungsnummer: WO9727154

(56) Entgegenhaltungen:
- EP-A- 0 083 974
- EP-A- 0 147 327
- DE-A- 4 201 615
- DATABASE WPI Week 8720 Derwent Publications Ltd., London, GB; AN 87-140294 XP002030273 & JP 62 079 841 A (TEIKOKU KAKO CO., LTD.) , 13.April 1987

## Beschreibung

Die vorliegende Erfindung betrifft mikrokristallin aufgebaute sphärische Al₂O₃-Sinterformkörper, Verfahren zu ihrer Herstellung sowie deren Verwendung.

Die Verfahren zur Herstellung von keramischen Kugeln lassen sich in mechanische, chemische, schmelzmetallurgische und pulvermetallurgische Methoden einteilen.

Die mechanischen Verfahren beschränken sich im wesentlichen darauf, die Kugelform durch mechanische Bearbeitung wie Schleifen, Polieren oder Mahlen zu erhalten. Voraussetzung ist, daß ein entsprechend vorgefertigter Formkörper vorliegt, der dann mechanisch weiter zur Kugel verarbeitet wird. Die mechanische Herstellung von Kugeln setzt somit häufig voraus, daß im Vorfeld ein schmelzmetallurgisches, chemisches oder pulvermetallurgisches Verfahren eingesetzt wurde, um die entsprechenden Formkörper für die Weiterverarbeitung zu erhalten.

Die chemischen Verfahren sind besonders geeignet, möglichst reine Werkstoffe zu erhalten. Ein Verfahren, das in der neueren Zeit immer häufiger angewandt wird, ist das sogenannte Sol-Gel-Verfahren. Beim Sol-Gel-Verfahren werden ausgehend von Metallsalzen mit geeigneten Lösungsmitteln sogenannte kolloidale Lösungen gebildet. Das Lösungsmittel ist meist Wasser und enthält die Metallverbindung in Form von nanoskaligen Oxiden oder Hydroxiden, die mit Hilfe entsprechender Dispergierhilfen oder Stabilisatoren kolloidal gelöst vorliegen. Die Gelierung kann durch pH-Wert-Veränderung, Temperaturveränderung, Alterung und/oder Zusatz von Elektrolyten erfolgen. Kugelförmige Gelteilchen erhält man, indem das Sol in ein die Gelbildung förderndes Medium eingetropft wird oder einem solchem Medium in Gasform ausgesetzt wird. Die kugelförmigen Gelteilchen werden anschließend getrocknet, kalziniert und gesintert.

Sol-Gel-Verfahren zur Herstellung von Keramikkugeln werden z.B. in der GB-A 1 032 105, der DE-A 3 035 845, der DE-A 2 147 472, der DE-A 2 733 384 und der DE-B 2 753 503 beschrieben. Die vorgenannten Verfahren beziehen sich meist auf die Herstellung von Brenn- oder Brutstoffpartikeln auf Basis von Thorium oder Uran. Die EP-A 0 224 375 beschreibt die Herstellung von transparenten sphärischen Mikrokugeln auf Basis von Zirkonoxid über den Sol-Gel-Weg.

Die Sol-Gel-Verfahren sind technisch aufwendig, erfordern relativ teure Rohstoffe und sind aus ökologischer Sicht nicht unproblematisch, da als Stabilisatoren für das Sol häufig anorganische Säuren wie Salpetersäure oder Salzsäure eingesetzt werden, die später beim Kalzinieren oder Sintern als Chlorgas oder nitrose Gase wieder freigesetzt werden.

Schmelzmetallurgisch lassen sich Keramikkugeln durch Eintropfen der flüssigen Schmelze in ein Kühlmedium, durch Verblasen der Schmelze mit Luft oder durch Verdüsen der flüssigen Schmelze mit einem Luft/Wasser-Gemisch herstellen. Ein elegantes Verfahren ist auch die Herstellung von sphärischen Keramikteilchen über rotierende Scheiben, wobei die Schmelze auf rotierende Scheiben gegossen wird, die dann die noch flüssige Schmelze in Tropfenform wegschleudern. Die Tropfen erstarren dabei relativ schnell zu festen Keramikkugeln. Es ist jedoch schwierig über diese Verfahren, die sehr gut für die Gewinnung von Metallen geeignet sind, reine und kompakte sphärische Keramikpartikel zu erhalten.

Die pulvermetallurgischen Verfahren gewinnen in der neueren Zeit für die Herstellung von sphärischen Keramikpartikeln eine immer größer werdende Bedeutung. Eines der wichtigsten Verfahren aus dieser Gruppe ist die Agglomeration. Das Prinzip der Agglomeration ist die Zusammenballung einzelner Pulverteilchen durch systematische Bewegung eines Pulverbettes. Meist müssen dem Pulver noch Bindemittel hinzugegeben werden, wobei man je nach Pulverart flüssige oder feste Bindemittel auswählt. Technisch haben die flüssigen Bindemittel die größte Bedeutung, bei denen die wäßrigen und alkoholischen Systeme aufgrund ihrer guten Handhabbarkeit dominieren. Bei den Verfahren mit festen Bindemittel werden meist Wachse oder Stearate als haftfördernde Mittel zugesetzt.

Bei den trockenen Verfahren, die ohne Zusätze von haftfördernden Mitteln arbeiten, kommt der Luftfeuchtigkeit eine bedeutende Rolle zu.

Üblicherweise werden für die Pulveragglomeration Behälter oder Mischer verwendet, die systematisch auf unterschiedliche Art bewegt werden, wobei auch mehrere Bewegungsarten miteinander kombiniert werden können.

So beschreiben die GB-A 1 344 870 und die GB-A 1 344 869 die Herstellung von sphärischen keramischen Formkörpern, bei denen Wachse und Stearate als Bindemittel eingesetzt werden. Die JP-A 05 137 997 beschreibt die Herstellung von sphärischen Zirkonoxid-, Aluminiumoxid- und Mullitformkörpern unter Einsatz von Wasser, wäßriger Lösung von Carboxy-Methyl-Cellulose, Polyvinyl-Alkohol und/oder Polyäthylen-Glykol als Bindemittel. Die DE-B 1 229 055 beschreibt die Herstellung von Tonerdekugeln durch Umwälzen von aktivierter Tonerde in einer zylinderartigen Kugelformmaschine unter gleichzeitigem Besprühen mit Wasser.

Die Forderung nach preiswerten, hochreinen, verschleißarmen Keramikkugeln von hoher mechanischer Festigkeit, für den Einsatz z.B. als Mahlkörper, als Kugellager, können alle o.g. Verfahren nicht oder nur bedingt erfüllen.

Die DE-A 3 507 376 beschreibt ein Verfahren und eine Vorrichtung zur Herstellung von Granulaten mit enger Korngrößenverteilung, bei dem das zu granulierende Produkt in flüssiger Form in ein Wirbelbett eingesprüht und dort auf entsprechende Keime aufgetragen wird. Die Granulatgröße wird durch die Stärke des Sichtgasstromes eines Zick-Zack-Sichters eingestellt. Ähnliche Verfahren bzw. Weiterentwicklungen der sogenannten Wirbelschicht-Sprühgranulation werden in der DE-A 3 808 277 und der DE-A 4 304 405 beschrieben.

Üblicherweise wird die Wirbelschicht-Sprühgranulation zur Trocknung und Agglomeration von agrochemischen Wirkstoffen (Fungizide, Insektizide, Herbizide, Wachstumsregulatoren und Düngemittel), Schädlingsbekämpfungsmitteln, pharmakologisch wirksamen Stoffen, Nährstoffen, Süßstoffen, Farbstoffen und anorganisch und organischen Chemikalien eingesetzt. Dabei können neben der aktiven Komponente und dem Verdünnungsmittel auch inerte Füllmaterialien, Dispergiermittel, Bindemittel und/oder sonstige Zusatzstoffe, wie zum Beispiel Konservierungsmittel und Farbstoffe im einzusprühenden flüssigen Produkt vorhanden sein.

Die über die Wirbelschicht-Sprühgranulation gewonnenen Granulat-Partikel zeichnen sich durch eine einheitliche Form und hohe Festigkeit aus, wodurch die Handhabung, Dosierung und Verarbeitung des ursprünglich feinpulvrigen Stoffes erleichtert oder sogar erst ermöglicht wird. Aufgrund ihrer mikroporösen Struktur und der damit verbundenen hohen Oberfläche lassen sich die Granulate spontan redispergieren, wodurch das Verfahren für die Verarbeitung von agrochemischen Wirkstoffen, Schädlingsbekämpfungsmitteln und pharmakologisch wirksamen Stoffen prädestiniert ist.

Aus der DE-A-42 01 615, von der die Erfindung ausgeht, sind mikrokristallin aufgebaute keramische Teile in Kugelform bekannt, die als Sinterformkörper auf der Basis von α- Aluminiumoxid durch Wirbelschicht-Sprühgranulation hergestellt werden. Auch diese Keramikkugeln eignen sich aufgrund ihrer mechanischen Eigenschaften nicht oder nur bedingt für den hier vorgesehenen Einsatz, bei dem es auf eine besonders hohe mechanische Festigkeit und hohe Dichte ankommt.

Aufgabe der vorliegenden Erfindung ist somit die Bereitstellung von sphärischen Sinterformkörpern, die die beschriebenen Nachteile des Standes der Technik nicht aufweisen. Überraschenderweise wurde nun bei Trocknungsversuchen mit keramischen Pulver-Suspensionen auf Basis von Al₂O₃ festgestellt, daß es mit der Wirbelschicht-Sprühgranulation gelingt, außerordentlich dichte Grünkörper zu erhalten, die sich ohne zusätzliche Manipulation, wie z.B. Kompaktieren, direkt zu einem dichten Keramikkörper sintern lassen. Aufgrund der hohen Gründichte des Granulates und der Feinheit und Sinteraktivität des Ausgangspulvers gelingt es, das Kornwachstum während des Sinterprozesses nahezu vollständig zu unterdrücken, so daß ein mikrokristallin aufgebauter sphärischer Keramikformkörper resultiert, der sich durch besondere Zähigkeit und Verschleißfestigkeit auszeichnet.

Gegenstand der vorliegenden Erfindung sind somit mikrokristallin aufgebaute sphärische Sinterformkörper auf Basis von α-Aluminiumoxid, wobei die mittlere Korngröße d₅₀ der Primärkristalle unter 3 µm liegt, die Durchmesser der Sinterformkörper zwischen 0,01 und 10 mm liegen und die Sinterformkörper eine Härte von >16 GPa (HV₂₀₀) und eine Dichte von >95 % der theoretischen Dichte TD aufweisen. Besonders gute Eigenschaften weisen erfindungsgemäße mikrokristallin aufgebaute sphärische Sinterformkörper auf, deren mittlere Korngröße der Primärkristalle d₅₀ <1 µm, insbesondere d₅₀ <0,4 µm, beträgt. Weiterhin weisen die erfindungsgemäßen Sinterformkörper bevorzugt Härten (HV₂₀₀) >19 GPa und Dichten >98 % der theroretischen Dichte TD auf. Die erfindungsgemäßen Sinterformkörper weisen bevorzugt einen α-Al₂O₃-Gehalt >99 Gew-% auf. Sie können neben α-Al₂O₃ eine oder mehrere Komponenten aus der Gruppe der Oxidelemente Co, Cr, Fe, Hf, Mg, Mn, Nb, Ni, Seltene Erden,. Si, Ti, V, Zn und Zr enthalten, wobei deren Anteil weniger als 50 Gew.-%, bevorzugt weniger als 20 Gew.-%, besonders bevorzugt weniger als 10 Gew.-%, jeweils bezogen auf den Gesamtfeststoffanteil beträgt.

Gegenstand der vorliegenden Erfindung ist auch ein Verfahren zur Herstellung der erfindungsgemäßen mikrokristallinen sphärischen Sinterformkörper, wobei eine Suspension einer Wirbelschicht-Sprühgranulation unterzogen wird, und die so erhaltenen Grünkörper anschließend bei Temperaturen zwischen 1 200 und 1 600°C gesintert werden.

Als Ausgangsstoff werden beim erfindungsgemäßen Verfahren feinteilige Feststoffe eingesetzt, die zur Herstellung der Suspension auf eine mittlere Teilchengröße von <3 µm, bevorzugt <1 µm, besonders bevorzugt <0,4 µm, herabgemahlen und/oder desagglomeriert werden. Die Zerkleinerung kann vorteilhaft mittels einer Vibrationsmühle, eines Attritors oder einer Rührwerkskugelmühle vorgenommen werden bzw. durch eine zusätzliche Naßvermahlung auf die gewünschte Korngröße erfolgen. Vorzugsweise enthält die Suspension einen Feststoffgehalt 5 bis 70 Gew.-%, bevorzugt 15 bis 50 Gew.-%, wobei die Suspension 0,5 bis 5 Gew.-% organische Stabilisatoren, bezogen auf den Feststoffgehalt als Dispergierhilfen enthält. Als Lösungsmittel wird vorzugsweise Wasser eingesetzt. Der Einsatz anderer Lösungsmittel wie z.B. Alkohole, Ketone oder anderer polarer organischer Flüssigkeiten ist auch möglich. Häufig sprechen jedoch ökologische und ökonomische Gründe dagegen.

Die Stabilisierung der Suspension kann sterisch oder elektrostatisch erfolgen. Im Falle der sterischen Stabilisierung können sämtliche bekannten Dispergierhilfen eingesetzt werden. Als solche eignen sich insbesondere Polyacrylsäuren, Polyglykolsäuren, Polymethacrylsäuren, organische Basen wie Triethylamin oder Carbonsäuren wie Essigsäure oder Propionsäure. Bevorzugt enthält die Suspension zwischen 0,5 und 5 Gew.-% entsprechender organischer Stabilisatoren. Im Falle der elektrostatischen Stabilisierung können vorteilhaft flüchtige anorganische Säuren wie Salpetersäure oder Salzsäure sowie Ammoniak als Base eingesetzt werden.

Die Stabilisierung der Suspension erfolgt entweder schon vor der Vermahlung oder nach der Vermahlung mit Hilfe eines Dispergators, wodurch eine schnelle und gleichmäßige Verteilung des Stabilisators gewährleistet ist. Bevorzugt vor, aber auch während und nach der Stabilisierung, können der Suspension Sinteradditive und Bindemittel zugesetzt werden. Als Sinteradditive kommen sämtliche bekannten Sinterhilfen für Al₂O₃ bzw. deren Vorstufen in Frage.

Bevorzugt enthält die erfindungsgemäße Suspension 0,5 bis 10 Gew.-% eines oder mehrerer Bindemittel aus der Gruppe Methylcellulose, Dextrin, Zucker, Stärke, Alginate, Glykole, Polyvinylpyrrolidon, Ligninsulfonat, Gummiarabicum, Polyvinylalkohol und Polyvinylacetat, bezogen auf den Feststoffgehalt der Suspension. Ebenso vorteilhaft kann die Suspension 0,5 bis 10 Gew.-% eines oder mehrerer Bindemittel aus der Gruppe Wasserglas, Kieselsol und Boehmit-Sol enthalten. Die Granulation wird vorzugsweise an Luft durchgeführt und kann in einer Wirbelbettapparatur angefahren werden, die bereits Startgranulat enthält. Es ist jedoch auch möglich, die Granulation in einer leeren Apparatur zur starten, wobei die Wirbelbettgranulation als Sprühtrocknung beginnt und in situ Keime erzeugt werden.

Die zu granulierende Suspension wird dabei durch Sprühdüsen in das Wirbelbett eingebracht. Besonders vorteilhaft ist die Verwendung von Zweistoffdüsen. Als Zerstäubungsgas kann jedes unter den Arbeitsbedingungen inerte Gas verwendet werden. Für Al₂O₃ wird vorzugsweise Luft eingesetzt. Die Menge an Zerstäubergas kann innerhalb eines größeren Bereiches variiert werden und richtet sich im allgemeinen nach den Apparate-Dimensionen und nach der Art und Menge des einzusprühenden Produktes. Die Temperatur des Zerstäubungsgas-Stromes bzw. die Lufteintrittstemperatur ist ebenfalls innerhalb eines größeren Bereichs variabel. Im allgemeinen arbeitet man bei Temperaturen zwischen 20 und 350°C. Die Sichtgas-Temperaturen sind ebenfalls innerhalb eines größeren Bereichs variabel. Auch hier arbeitet man bevorzugt in einem Bereich zwischen 20 und 350°C. Die Menge und Geschwindigkeit des Sichtgases richtet sich nach der Dichte und der gewünschten Korngröße des Granulats.

Die Korngröße kann primär durch Gasstrom und Geschwindigkeit des Sichtergases gesteuert werden. Mit dem in der DE-A 3 507 376 beschriebenem Zick-Zack-Sichter ist es im Falle des Aluminiumoxids möglich, gezielt ein enges Kornband im Korngrößenbereich zwischen 0,01 und 10 mm mit einer Bandbreite ≤1 mm einzustellen.

Das fertige Granulat kann direkt - oder bevorzugt nach einem Kalzinier-Zwischenschritt bei Temperaturen zwischen 300 und 600°C - bei Temperaturen zwischen 1200 und 1600°C gesintert werden. Als Sinteröfen können Drehrohröfen, Durchschuböfen oder Kammeröfen eingesetzt werden. Besonders vorteilhaft wird die Sinterung einem direkt oder indirekt beheizten Drehrohrofen durchgeführt, in dem hohe Aufheizraten, kombiniert mit kurzen Verweilzeiten, realisiert werden können, wodurch die Herstellung dichter Sinterkörper, ohne daß es zu einem starkem Kristallwachstum kommt, begünstigt wird.

Nach dem erfindungsgemäßen Verfahren gelingt die Herstellung von sphärischen hochdichten mikrokristallinen und hochreinen Sinterkörpern mit einer hohen Härte und Verschleißfestigkeit, deren mittlere Primärkristallitgröße bevorzugt unter 1 µm liegt und deren Durchmesser beliebig zwischen 0,01 und 10 mm eingestellt werden kann.

Aufgrund dieser Eigenschaften eignen sich die erfindungsgemäßen Sinterkörper hervorragend als Mahlkugeln, Isoliermaterialien, Füllstoffe, für den Einsatz als verschleißfeste Zusätze für Laminate und Lacke, für den Einsatz in Kugellagern, als Katalysatorträger oder ähnliches.

Gegenstand dieser Erfindung ist somit auch die Verwendung der erfindungsgemäßen Sinterkörper als Mahlkugeln, Isoliermaterial, Füllstoff, Kugellager, Katalysatorträger und Zusatz in Laminaten und Lacken.

Im folgenden wird die Erfindung beispielhaft erläutert, ohne daß darin eine Einschränkung zu sehen ist.

### Beispiel 1

70 kg α-Al₂O₃ mit einer mittleren Korngröße von d₅₀ = 1,5 µm wurde in Form eines 50 %-igen wäßrigen Schlickers, der mit Hilfe einer Polyacrylsäure als Dispergierhilfe stabilisiert wurde, in einer Rührwerkskugelmühle auf eine mittlere Korngröße von d₅₀ = 0,4 µm vermahlen. Der d₉₀ -Wert der Suspension lag bei 0,9 µm. Die Suspension wurde mit destilliertem Wasser auf einen Feststoffgehalt von 30 Gew.-% verdünnt und mit 10 l einer 10 %igen wäßrigen Suspension eines Polyvinylalkohols als Binder (Mowiol 8/88, Hoechst AG Deutschland) versetzt.

Anschließend wurde die Suspension in einem Wirbelschicht-Sprühgranulator (AGT 150, Fa. Glatt Deutschland) bei einer Lufteintrittstemperatur von 95°C, einer Schichttemperatur von 45°C, einem Sprühdruck von 3 bar und einer Sprührate von 70 g/min verarbeitet. Zur Keimbildung wurde eine feine Granulatfraktion mit einer mittleren Granulatgröße von 0,2 mm, die bei einer vorangegangenen Wirbelschicht-Sprühgranulation über eine in situ Keimbildung gewonnen worden war, eingesetzt. Die Abtrennung des gewünschten Granulats erfolgte über einen Zick-Zack-Sichter, der mit 9 Nm3/h Luft betrieben wurde. 70 Gew.-% des so gewonnenen Granulats hatte einen Durchmesser zwischen 0,8 und 1,2 mm, bei ca. 20 Gew.-% lag der Durchmesser zwischen 0,3 und 0,8 mm und ca. 10 Gew.-% der Granulate hatten einen Durchmesser von ≥ 1,2 mm. Die Restfeuchte der Granulate lag unter 1 %.

Die Granulate wurden bei 500°C kalziniert und anschließend bei 1480°C in einem Kammerofen gesintert.

Die gesinterten Formkörper hatten eine Dichte von 98,3 % der TD und eine Härte von 18,7 GPa (HV = 0,2). Die mittlere Primärkristallitgröße lag bei 0,8 µm.

### Beispiel 2

Wie Beipiel 1, als Binder wurden jedoch 2 Gew.- % Polyvinylpyrrolidon, bezogen auf den Al₂O₃-Gehalt, eingesetzt.

Die gesinterten Formkörper hatten eine Dichte von 96,5 % der TD und eine Härte von 17,6 GPa (HV 0,2). Die mittlere Primärkristallitgröße lag bei 0,8 µm.

### Beispiel 3

Wie Beispiel 1, die Abtrennung des gewünschten Granulats erfolgte über eine Sichterkammer, in der mehrere Zick-Zack-Sichter hintereinandergeschaltet waren. Die Luftmenge wurde so eingestellt, daß 98 Gew.-% der ausgetragenen Granulate einen Durchmesser zwischen 0,5 und 0,7 mm hatten. Die Sinterung wurde direkt, ohne die Kalzinierung als Zwischenschritt, in einem Drehrohrofen bei 1480°C gesintert.

Die gesinterten Formkörper hatten eine Dichte von 98,6 % der TD und eine Härte von 19,5 GPa (HV 0,2). Die mittlere Primärkristallitgröße lag bei 0,6 µm.

### Beispiel 4 (Einsatz als Mahlkörper)

Handelsübliches α-Al₂O₃ mit einer mittleren Korngröße d₅₀ von 1,5 µm wurde in einer Rührwerkskugelmühle (Typ PMC 25 TEX, Fa. Drais) 8 Stunden naßvermahlen. Die Slurry hatte einen Feststoffgehalt von 50 Gew.-%. Die Mahlung wurde im Kreislauf betrieben, wobei die Batchgröße 70 kg Al₂O₃ betrug. Die Mahlkörperfüllung lag in allen getesteten Fällen bei 65 Vol.-%. Der Mahlkörperverschleiß wurde nach der Mahlung durch einfaches Auswiegen bestimmt.

| | Mahlkörper nach Beispiel 1 | handelsübl. Al₂O₃-Mahlk. | handelsübl. YTZ-Mahlk. | handelsübl. Al₂O₃Mahlk. |
|---|---|---|---|---|
| chemische Zusammensetzung [Gew.-%] | 95 % Al₂O₃ | 99,5 % Al₂O₃ | 95 % ZrO₂ 5 % Y₂O₃ | 86 % Al₂O₃ 11 % SiO₂ 3 % Sonstige |
| Kugeldurchmesser | 1 mm | 1 mm | 1 mm | 1 mm |
| Mahlkörperverschleiß | 3 Gew.-% | 20 Gew.-% | 5 Gew.-% | 7 Gew.-% |
| Produktfeinheit d₉₀ | 0,95 µm | 1,18 µm | 0,95 µm | 1,22 µm |
| Produktfeinheit d₅₀ | 0,46 µm | 0,60 µm | 0,42 µm | 0,63 µm |

Bei den Ergebnissen mit den YTZ-(Yttrium-stabilisiertes Zirkonoxid)Mahlkörpern ist zu berücksichtigen, daß die Mahlkugeln wesentlich teurer sind als die erfindungsgemäßen sphärischen Sinterkörper, so daß sich die Mahlkosten bei gleich gutem Ergebnis auf mindestens das zehnfache im Vergleich zu den Kosten beim Einsatz der erfindungsgemäßen Mahlkugeln belaufen werden.

## Patentansprüche

1. Mikrokristallin aufgebaute sphärische Sinterformkörper auf Basis von α-Aluminiumoxid, deren Durchmesser zwischen 0,01 und 10 mm liegen, dadurch gekennzeichnet, daß die mittlere Korngröße d₅₀ der Primärkristalle unter 3 µm liegt und die Sinterformkörper eine Härte von ≥ 16 GPa (HV₂₀₀) und eine Dichte von ≥ 95 % der theoretischen Dichte TD aufweisen.

2. Sphärische Sinterformkörper gemäß Anspruch 1, dadurch gekennzeichnet. daß die mittlere Korngröße der Primärkristalle d₅₀ ≤ 1 µm beträgt.

3. Sphärische Sinterformkörper gemäß einem der Ansprüche 1 oder 2, dadurch gekennzeichnet, daß die mittlere Komgröße der Primärkristalle d₅₀ ≤ 0,4 µm beträgt.

4. Sphärische Sinterformkörper gemäß einem oder mehreren der Ansprüche 1 bis 3, dadurch gekennzeichnet, daß die Härte (HV₂₀₀) ≥ 19 GPa und die Dichte ≥ 98 % der theoretischen Dichte TD betragen.

5. Sphärische Sinterformkörper gemäß einem oder mehreren der Ansprüche 1 bis 4. dadurch gekennzeichnet, daß der α-Al₂O₃-Gehalt ≥ 99 Gew. beträgt.

6. Sphärische Sinterformkörper gemäß einem oder mehreren der Ansprüche 1 bis 4, dadurch gekennzeichnet, daß sie neben α-Al₂O₃ eine oder mehrere Komponenten aus der Gruppe der Oxide der Elemente Co, Cr, Fe. Hf, Mg, Mn, Nb, Ni, Seltene Erden, Si, Ti, V, Zn und Zr enthalten. wobei deren Anteil weniger als 50 Gew.-%, bevorzugt weniger als 20 Gew,-%, besonders bevorzugt weniger als 10 Gew.-%, jeweils bezogen auf den Gesamtfeststoffanteil, beträgt.

7. Verfahren zur Herstellung der mikrokristallinen sphärischen Sinterformkörper gemäß einem oder mehreren der Ansprüche 1 bis 6, bei dem eine Suspension einer Wírbelschicht-Sprühgranulation unterzogen wird und die so erhaltenen Grünkörper anschließend bei Temperaturen zwischen 1200 und 1600°C gesintert werden, dadurch gekennzeichnet. daß die Suspension eine α-Al₂O₃-haltige Suspension ist und daß die Feststoffe zur Herstellung der Suspension auf eine mittlere Teilchengröße von ≤ 3 µm, bevorzugt ≤ 1µm, besonders bevorzugt ≤ 0,4 µm, herabgemahlen und/oder desagglomeriert werden.

8. Verfahren nach Ansprch 7, dadurch gekennzeichnet, daß die Suspension einen Feststoffgehalt von 5 bis 70 Gew.-%, bevorzugt 15 - 50 Gew.-%, aufweist und die Suspension 0,5 - 5 Gew.-% organische Stabilisatoren, bezogen auf den Feststoffgehalt, als Dispergierhilfen enthält.

9. Verfahren gemäß einem oder mehreren der Ansprüche 7 bis 8, dadurch gekennzeichnet, daß die Suspension 0,5 bis 10 Gew.-% eines oder mehrerer Bindemittel aus der Gruppe Methylcellulose, Dextrin, Zucker, Stärke, Alginate, Glykole, Polyvinylpyrrolidon, Ligninsulfonat, Gummiarabicum, Polyvinylalkohol und Polyvinylacetat, bezogen auf den Feststoffgehalt der Suspension, enthält.

10. Verfahren gemäß einem oder mehreren der Ansprüche 7 bis 8, dadurch gekennzeichnet, daß die Suspension 0,5 bis 10 Gew.-% eines oder mehrerer Bindemittel aus der Gruppe Wasserglas, Kieselsol und Boehmit-Sol enthält.

11. Verfahren gemäß einem oder mehreren der Ansprüche 7 bis 10, dadurch gekennzeichnet, daß das Sprühgranulat vor dem Sintern bei Temperaturen zwischen 300 und 600°C kalziniert wird.

12. Verwendung der sphärischen mikrokristallinen Sinterformkörper gemäß einem oder mehreren der Ansprüche 1 bis 6 als Mahlkugeln, Isoliermaterial, Füllstoff. Katalysatorträger, verschleißfester Zusatz von Laminaten oder Lacken sowie für den Einsatz in Kugellagern.

## Claims

1. Spherical sintered shaped bodies with a microcrystalline structure on a base of α-aluminium oxide, the diameters of which lie between 0.01 and 10 mm,
**characterised in that** the mean grain size d₅₀ of the primary crystal is under 3µm and the sintered shaped bodies have a hardness of ≥ 16 Gpa (HV₂₀₀) and a density of ≥ 95 % of the theoretical density TD.

2. Spherical sintered shaped bodies according to Claim 1,
**characterised in that** the mean grain size of the primary crystal d₅₀ is ≤ 1 µm.

3. Spherical sintered shaped bodies according to one of Claims 1 or 2,
**characterised in that** the mean grain size of the primary crystal d₅₀ is ≤ 0.4 µm.

4. Spherical sintered shaped bodies according to one or more of Claims 1 to 3,
**characterised in that** the hardness (HV₂₀₀) is ≥ 19 GPa and the density is ≥ 98 % of the theoretical density TD.

5. Spherical sintered shaped bodies according to one or more of Claims 1 to 4,
**characterised in that** the α-Al₂O₃ content is ≥ 99 weight.

6. Spherical sintered shaped bodies according to one or more of Claims 1 to 4,
**characterised in that** apart from α-Al₂O₃ they contain one or more constituents from the group of the oxides of the elements Co, Cr, Fe, Hf, Mg, Mn, Nb, Ni, rare earths, Si. Ti, V, Zn and Zr, wherein their percentage is less than 50 % by weight, preferably less than 20 % by weight, particularly preferably less than 10 % by weight, in each case in relation to the total percentage of solids.

7. A method for the manufacture of the microcrystalline spherical sintered shaped bodies according to one or more of Claims 1 to 6, in which a suspension is subjected to a fluidised bed spray granulation and the thus obtained green bodies are then sintered at temperatures of between 1200 and 1600°C,
**characterised in that** the suspension is a suspension containing α-Al₂O₃
**and in that** the solids are ground down and/or disagglomerated to a mean particle size of ≤ 3µm, preferably ≤ 1 µm, especially preferably ≤ 0.4 µm.

8. A method according to Claim 7,
**characterised in that** the suspension has a solids content of 5 to 70 % by weight, preferably 15 - 50 % by weight, and the suspension contains 0.5 - 5 % by weight organic stabilisers, in relation to the solids content, as dispersing agents.

9. A method according to one or more of Claims 7 to 8,
**characterised in that** the suspension contains 0.5 to 10 % by weight of one or more binding agents from the group consisting of methyl cellulose, dextrine, sugar, starch, alginates, glycols, polyvinyl pyrrolidone, lignosulphonate, gum arabic, polyvinyl alcohol and polyvinyl acetate, in relation to the solids content of the suspension.

10. A method according to one or more of Claims 7 to 8,
**characterised in that** the suspension contains 0.5 to 10 % by weight of one or more binding agents from the group consisting of soluble sodium, siliceous sol and boehmite sol.

11. A method according to one or more of Claims 7 to 10,
**characterised in that** the spray granulate is calcined before sintering at temperatures of between 300 and 600°C.

12. Use of the spherical microcrystalline sintered shaped bodies according to one or more of Claims 1 to 6 as grinding balls, insulating material, filling material, catalyst carriers, wear-resistant admixture for laminates or lacquers and also for use in ball bearings.

## Revendications

1. Corps fritté, de forme sphérique, à structures microcristallines, à base d'oxyde d'aluminium α, dont le diamètre est compris entre 0,01 et 10 mm,
caractérisé en ce que
la taille moyenne de grain d₅₀ des cristaux primaires est inférieure à 3 µm et les corps de forme frittés ont une dureté ≥ 16 GPa (HV₂₀₀) et présentent une densité ≥ 95 % de la densité théorique TD.

2. Corps fritté, de forme sphérique selon la revendication 1,
caractérisé en ce que
la taille de grain moyenne des cristaux primaires d₅₀ ≤ 1 µm.

3. Corps fritté, de forme sphérique selon l'une des revendications 1 ou 2,
caractérisé en ce que
la taille de grain moyenne des cristaux primaires d₅₀ ≤ 0,4 µm.

4. Corps fritté, de forme sphérique selon l'une ou plusieurs des revendications 1 à 3,
caractérisé en ce que
la dureté (HV₂₀₀) ≥ 19 GPa et la densité ≥ 98 % de la densité théorique TD.

5. Corps fritté, de forme sphérique selon l'une ou plusieurs des revendications 1 à 4,
caractérisé en ce que
la teneur en Al₂O₃ α ≥ 99 % en poids.

6. Corps fritté, de forme sphérique selon l'une ou plusieurs des revendications 1 à 4,
caractérisé en ce que
outre Al₂O₃ il contient un ou plusieurs composants issus du groupe des oxydes des éléments Co, Cr, Fe, Hf, Mg, Mn, Nb, Ni, terres rares, Si, Ti, V, Zn et Zr, leur proportion étant inférieure à 50 % en poids, de préférence inférieure à 20 % en poids, de façon particulièrement préférée inférieure à 10 % en poids, chaque fois en se référant à la proportion totale en solides.

7. Procédé de fabrication des corps de forme frittés, sphériques microcristallins selon l'une ou plusieurs des revendications 1 à 6, dans lequel une suspension est soumise à une granulation par pulvérisation en lit fluidisé et le corps cru ainsi obtenu étant ensuite fritté à des températures comprises entre 1200 et 1600°C,
caractérisé en ce que
la suspension est une suspension contenant du Al₂O₃-α et en ce que les solides destinés à la fabrication de la suspension sont broyés pour diminuer leur taille ou bien désagglomérés, pour atteindre une taille de particule moyenne ≤ 3 µm, de préférence ≤ 1 µm, de façon particulièrement préférée ≤ 0,4 µm.

8. Procédé selon la revendication 7,
caractérisé en ce que
la suspension présente une teneur en solides de 5 à 70 % en poids, de préférence 15-50 % en poids, et la suspension contient 0,5-5 % en poids de stabilisateurs organiques, en se référant à la teneur en solides, à titre d'auxiliaires de dispersion.

9. Procédé selon l'une ou plusieurs des revendications 7 à 8,
caractérisé en ce que
la suspension contient de 0,5 à 10 % en poids d'un ou plusieurs liants issus du groupe de la méthylcellulose, dextrine, sucre, amidon, alginate, glycols, polyvinylpyrrolidone, lignine sulfonate, gomme arabique, alcool polyvinylique et acétate de polyvinyl, en se référant à la teneur en solides de la suspension.

10. Procédé selon l'une ou plusieurs des revendications 7 à 8,
caractérisé en ce que
la suspension contient de 0,5 à 10 % en poids d'un ou plusieurs liants issus du groupe du verre soluble, sol de silice et sol de boehmite.

11. Procédé selon l'une ou plusieurs des revendications 7 à 10,
caractérisé en ce que
le granulat pulvérulent est calciné avant frittage, à des températures comprises entre 300 et 600°C.

12. Utilisation des corps de forme frittés microcristallins sphériques selon l'une ou plusieurs des revendications 1 à 6 comme billes de broyage, matériaux isolants, charges, supports de catalyseur, additifs résistant à l'usure pour des laminés ou des vernis ou bien pour l'utilisation dans des roulements à billes.
